# EUROPEAN PATENT APPLICATION

(11) **EP 0 522 708 A2**
(43) Date of publication of application: **13.01.1993**
(21) Application number: 92305178.3
(22) Date of filing: 05.06.1992
(51) Int. Cl.: G01F 1/42, G01F 1/36, G01F 1/26

(54) **Flow meters**

(30) Priority: 08.07.1991 GB 9114675
(71) Applicant: SPIRAX-SARCO LIMITED, Cheltenham, Gloucestershire GL50 3EN (GB)
(72) Inventor: Carmichael, Richard Quentin, Huntley, Gloucestershire GL19 3DY (GB)
(74) Representative: Cheyne, John Robert Alexander Mackenzie

(57) **Abstract**

A flow meter (12) comprises an orifice plate (18) mounted within a tubular duct 14. A flange (16) is welded to the duct (14), and is clamped between pipe flanges (6, 8) to support the flow meter (12) in a pipeline. Pressure tappings (32, 36) are provided in the flange (16) and communicate, respectively, with the upstream and downstream sides of the orifice plate (18).

## Description

This invention relates to flow meters.

A variable orifice flow meter is disclosed in GB1566251. This flow meter comprises a body accommodating an orifice plate, and a plug which is situated within the orifice and is axially displaceable, under a pressure difference created by a flowing fluid, to change the flow area of the orifice. There is a flange at each end of the body for connecting the flow meter in a pipe run. A pressure tapping is provided in each flange, one communicating with the upstream side of the orifice plate, and one communicating with the downstream side.

If a flow meter as disclosed in GB1566251 is to be installed in a pipe run, the pipe run must be specifically designed, or modified, for this purpose. This is because the axial length of the flow meter is too great to be accommodated at an existing pipe joint.

According to the present invention there is provided a flow meter comprising a tubular duct through which, in use, fluid passes, the duct having a constriction across which a pressure drop is created in the flowing fluid, the duct also having a supporting flange for supporting the flow meter in a conduit, the flange having ports which, in use, are open to the exterior of the conduit and communicate with the interior of the conduit on opposite sides, respectively, of the constriction.

A flow meter in accordance with the present invention can be installed in a pipeline by clamping the flange between adjacent pipe ends which were previously connected directly to each other.

The constriction preferably comprises an orifice provided in an orifice plate which may be mounted in the tubular duct. In a preferred embodiment, the flange is at one end of the tubular duct, and the orifice plate is at the other.

The inside surface of the tubular duct may have a smoothly curved surface, as seen in axial cross-section, the diameter of which decreases in the flow direction through the duct. This avoids turbulence in the duct.

The ports may be at different positions around the supporting flange, for example 180° apart, although for some purposes it may be more convenient for the ports to be closer together.

One of the ports may be connected by a radially extending passage to an opening in an annular groove defined between the flange and the tubular duct. In one embodiment, this groove communicates with the interior of the duct on the upstream side of the constriction, and the other port is connected by an axially extending passage in the flange to an opening in an axial end face of the flange, the opening being situated outside the tubular duct and so communicating with the interior of the conduit on the downstream side of the constriction.

In another embodiment, the groove defined between the flange and the tubular duct communicates with the interior of the conduit on the downstream side of the constriction, the other port being connected by a radial passage in the flange to the interior of the duct on the upstream side of the constriction.

For a better understanding of the present invention, and to show how it may be carried into effect, reference will now be made, by way of example, to the accompanying drawings, in which:
Figure 1 is a sectional view of pipework in which a flow meter is installed; and
Figure 2 is a sectional view of another embodiment of flow meter.

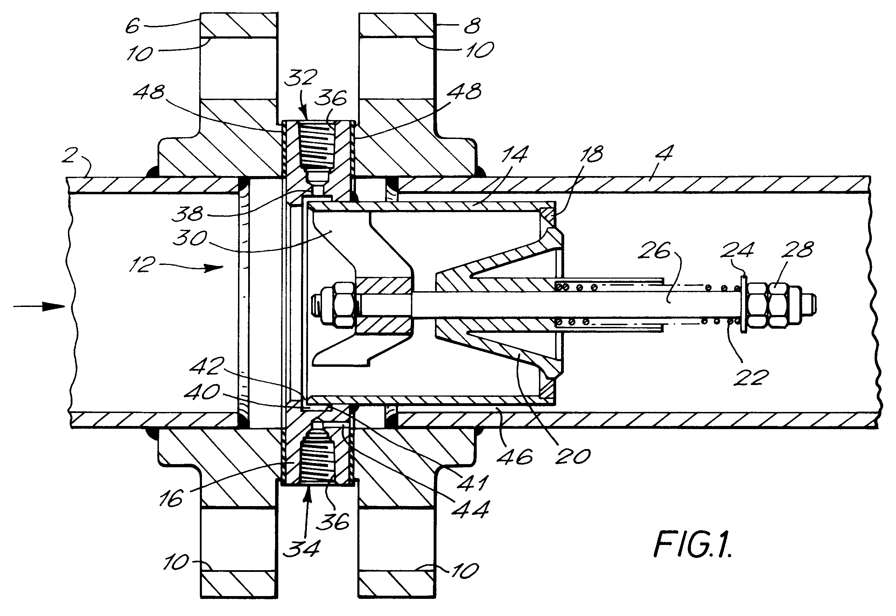

As shown in Figure 1, two pipes 2 and 4 are provided with respective end flanges 6 and 8 which are secured together by bolts (not shown) passing through aligned openings 10.

A flow meter 12 is installed within the conduit formed by the two pipes 2 and 4. This flow meter comprises a cylindrical support in the form of a tubular duct 14 which has a supporting flange 16 welded to it at one end, and an orifice plate 18 welded to it at the other. A plug 20 in the form of a contoured cone is situated within the orifice plate 18 and is axially movable on a rod 26 against the restoring force of a spring 22. The spring 22 reacts against an abutment plate 24 which is positioned on the rod 26 by means of adjustment nuts 28. The rod 26 is supported by a fixed carrier 30.

The flange 16 has upstream and downstream pressure tappings 32 and 34, which are offset from each by 180° about the flange. Each pressure tapping has a tapered threaded bore 36 for the attachment of a manometer or other pressure measuring device. The upstream pressure tapping 32 comprises a radially extending passage 38 which opens into a groove 40 which extends around the inner surface of the flange 16 and is defined between an annular recess 41 in the flange 16, and the tubular duct 14. The adjacent end of the tubular duct 14 almost closes the groove 40, but stops a short distance from one side of the annular recess 41, to leave a small gap 42 providing communication between the passage 38 and the interior of the duct 14.

The downstream pressure tapping 34 has an axially extending passage 44 which opens at an end face of the flange 16 at a position outside the support 14. This passage 44 thus communicates with the downstream side of the orifice 18 (with respect to the indicated direction of flow) via an annular gap 46 defined between the outer surface of the duct 14 and the inner surface of the pipe 4.

The flow meter 12 is installed in the conduit by clamping the supporting flange 16 between the pipe flanges 6 and 8, using gaskets 48 to ensure proper sealing. The flow meter can be installed in existing pipework, where the flanges 6 and 8 are initially connected directly to each other to form a pipe joint. Separation of the flanges 6 and 8 to receive the flange 16 of the flow meter 12 can be accomplished by relatively small deflections in the adjacent pipework.

It will be appreciated that the outside diameter of the supporting flange 16 lies within the circle on which lie the holes 10, and so the bolts passing through the holes 10 do not also pass through the supporting flange 16. This means that the supporting flange 16 does not need to be adapted so as to match any specific configuration of holes 10.

In operation, fluid flowing in the direction indicated by an arrow in the drawing will enter the duct 14 and, owing to the differential pressure between the two sides of the orifice plate 18, will displace the contoured cone 20 to the right as seen in the drawings. This will open the orifice in the orifice plate 18 to provide a variable constriction in the flow path through the duct 14. The size of this constriction is determined by the balance between the differential pressure acting across the cone 20 and the restoring force of the spring 22.

The upstream pressure is monitored by way of the tapping 38, and the downstream pressure is monitored by way of the tapping 34. From these two pressures can be computed the flow rate past the flow meter 12.

The construction and installation of the flow meter 12 shown in the drawing are relatively simple by comparison with those of known flow meters of the same general type, as exemplified by that disclosed in GB1566251. The flow meter can be supplied in specified sizes to suit pipes of different nominal diameter, without needing also to specify any particular pipeline flange configuration.

The gap 42 and groove 40 provide a pressure averaging effect, and a similar effect is also achieved by virtue of the gap 46 between the duct 14 and the pipe 4. Thus, the pressures detected at the tappings 32 and 34 accurately represent the average pressures upstream and downstream of the orifice plate 18.

A flow meter as described above can be made relatively small and light, by comparison with known flow meters of similar type, and this has advantages during handling and transportation.

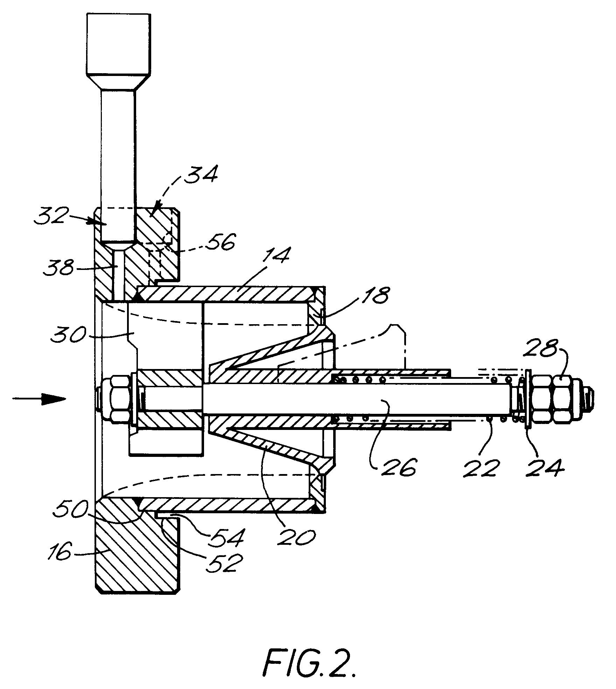

In the embodiment shown in Figure 2, components which are generally similar to those of the embodiment of Figure 1 are denoted by the same reference numbers. In the flow meter of Figure 2, the pressure tappings 32, 34 are offset from each other by approximately 45°, which in some circumstances may provide easier access than the oppositely disposed pressure tappings of the flow meter shown in Figure 1.

The flange 16 has two steps 50, 52 on its radially inner surface. The first step 50 receives the duct 14 so that the inner surface of the duct 14 is flush with the radially innermost surface of the flange 16. The pressure tapping 32 communicates with the interior of the duct 14 through a radial passage 38 which opens at the radially innermost surface of the flange 16.

The second step 52 defines with the outer surface of the duct 14 a groove 54. The pressure tapping 34 communicates with the groove 54 through a radial passage 56. The pressure tappings 32 and 34 thus communicate with the interior of the conduit respectively upstream and downstream of the orifice plate 18.

In order to avoid turbulence in the fluid flow through the duct 14 to the orifice plate 18, the internal surfaces of the flange 16 and the duct 18 may be smoothly contoured, as shown in dotted outline in Figure 2.

## Claims

1. A flow meter comprising a tubular duct (14) through which, in use, fluid passes, the duct having a constriction (18) across which a pressure drop is created in the flowing fluid, the duct (14) also having a supporting flange (16) for supporting the flow meter in a conduit (2,4), characterized in that the flange (16) has ports (32,34) which, in use, are open to the exterior of the conduit (2,4) and communicate with the interior of the conduit (2,4) on opposite sides, respectively, of the constriction (18).

2. A flow meter as claimed in claim 1, characterized in that the constriction (18) comprises an orifice defined by an orifice plate.

3. A flow meter as claimed in any one of the preceding claims, characterized in that the flange (16) is situated at one end of the tubular duct (14).

4. A flow meter as claimed in claim 3, characterized in that the constriction (18) is situated at the other end of the tubular duct (14).

5. A flow meter as claimed in any one of the preceding claims, in which one of the ports (32,34) communicates with a groove (40,54) which is defined between the flange (16) and the tubular duct (14) and which is positioned to open into a conduit (2,4) in which the flow meter is situated.

6. A flow meter as claimed in any one of the preceding claims, characterized in that one (32) of the ports is connected to an opening on the inner annular face of the flange (16) by a radially extending passage (38).

7. A flow meter as claimed in any one of the preceding claims, characterized in that a contoured plug (20) is situated within the constriction (18), the plug (20) being axially displaceable under a pressure difference applied across the constriction (18), thereby to vary the flow cross-section of the constriction (18).

8. A flow meter as claimed in any one of the preceding claims, characterized in that the internal surface of the tubular duct (14) is smoothly curved, as viewed in axial cross-section, to promote streamlined flow in the duct (14).

9. A pipeline including a flow meter in accordance with any one of the preceding claims.
